# EUROPÄISCHE PATENTSCHRIFT

(11) **EP 2 192 567 B1**
(45) Veröffentlichungstag und Bekanntmachung des Hinweises auf die Patenterteilung: **24.08.2016**
(21) Anmeldenummer: 08020272.4
(22) Anmeldetag: 21.11.2008
(51) Int. Cl.: G01M 17/007, G09B 19/16, G09B 9/00, G09B 9/042

(54) **SYSTEM UND VERFAHREN ZUR FUNKTIONSPRÜFUNG EINES FAHRERASSISTENZSYSTEMS**
SYSTEM AND METHOD FOR TESTING THE FUNCTIONALITY OF A DRIVER ASSIST SYSTEM
SYSTÈME ET PROCÉDÉ DESTINÉS À LA SURVEILLANCE DU FONCTIONNEMENT D'UN SYSTÈME D'ASSISTANCE DU CONDUCTEUR

(43) Veröffentlichungstag der Anmeldung: 02.06.2010
(73) Patentinhaber: 4activeSystems GmbH, 8772 Traboch (AT)
(72) Erfinder: Riedel, Helmut, Dr., 86697 Oberhausen (DE); Fritz, Martin, 8720 Kobenz (AT); Ringswirth, Jochen, 8680 Mürzzuschlag (AT); Holze, Raimond, 38446 Wolfsburg (DE); Meinecke, Marc-Michael, Dr., 38524 Sassenburg (DE); Vieth, Dieter, 38350 Helmstedt (DE)
(74) Vertreter: Dilg, Haeusler, Schindelmann Patentanwaltsgesellschaft mbH

(56) Entgegenhaltungen:
- DE-A1-102004 033 047
- DE-A1-102005 032 334
- DE-A1-102007 021 666
- DE-A1-102007 035 474
- DE-U1-202008 003 554
- FR-A- 2 680 902
- US-A1- 2005 155 441
- J. HOFFMANN, H. WINNER: "Das Darmstädter Dummy Target EVITA - Ein Werkzeug zur Beurteilung von Antikollisionssystemen"[Online] April 2007 (2007-04), Seiten 1-15, XP002531653 Gefunden im Internet: URL:http://www.fzd.tu-darmstadt.de/media/f achgebiet_fzd/publikationen_3/2007/2007_ho ffmann_vdi.pdf> [gefunden am 2009-06-10]
- PETER SCHWERDTMANN: "Das Auto von heute hält die Augen offen" INTERNET ARTICLE, [Online] 15. Juni 2006 (2006-06-15), Seiten 1-2, XP002531654 Auto-Reporter.net Gefunden im Internet: URL:http://www.auto-reporter.net/artikel.l as?katsearch=7&subkatsearch=&subsubkatsear ch=&artikel=15872&textphoto=photo> [gefunden am 2009-06-10]

## Beschreibung

Die Erfindung betrifft ein System und ein Verfahren zur Funktionsprüfung eines Fahrerassistenzsystems.

Moderne Fahrzeuge sind mit einem oder mehreren Fahrerassistenzsystemen ausgebildet, wobei dabei ein derartiges Fahrerassistenzsystem eine Sensorik umfassen kann, welche zur Umfelddetektion des Fahrzeugs ausgebildet ist. Dadurch können verschiedenste Informationen der Fahrzeugumgebung erfasst werden und es kann darauf reagiert werden. Insbesondere können derartige Fahrerassistenzsysteme so ausgebildet sein, dass sie abhängig von den detektierten Informationen eine Warnung an einen Fahrzeuginsassen ausgeben oder sogar zum eigenen selbständigen Eingriff in das Fahrverhalten des Fahrzeugs konzipiert sind. Durch derartige Fahrerassistenzsysteme können kritische Verkehrssituationen verhindert oder auch dahingehend beeinflusst werden, dass ein Unfall gegebenenfalls vermieden werden kann. Darüber hinaus können derartige Fahrerassistenzsysteme so ausgebildet sein, dass sie im Falle eines nicht mehr zu vermeidenden Unfalls frühzeitig oder zur Abschwächung der Unfallfolgen Komponenten des Fahrzeugs, wie beispielsweise einen Airbag, die Bremse, die Lenkung, etc., situationsangepasst aktivieren.

Da derartige Fahrerassistenzsysteme jedoch relativ komplex aufgebaut sind und im Hinblick auf Detektion von Informationen sowie Verarbeitung dieser Informationen und auch im Hinblick auf die aus den erhaltenen Informationen gezogenen Schlussfolgerungen vielen Fehlerquellen unterliegen können, ist eine ausreichende und möglichst situationsnahe Funktionsprüfung erforderlich und im Hinblick auf die Minimierung von Fehlerquellen im tatsächlichen Serieneinsatz durchzuführen.

US 2005155441 A1 offenbart eine Vorrichtung sowie ein Verfahren zum Simulieren eines Kollisionsunfalls. Die Vorrichtung weist eine Schiene auf, die von zwei Stützen getragen wird. Entlang der Schiene ist ein Schlitten verfahrbar, an welchem ein Dummy-Objekt mittels einer Schnur aufgehängt ist. Ein Seilzugsystem wird zum Verfahren des Schlittens verwendet.

Aus dem Dokument FR-A-2 680 902 ist eine Schienenvorrichtung zum Katapultieren eines Prüfkörpers bekannt. Die Schienenvorrichtung eignet sich für die Schulung eines Fahrers eines Kraftfahrzeugs.

Aus dem Dokument J. Hoffmann, H. Winner: "Das Darmstädter Dummy Target EVITA - Ein Werkzeug zur Beurteilung von Antikollisionssystemen", April 2007, Seiten 1 bis 15 (http://www.fzd.tudarmstadt.de/media/fachgebiet_fzd/publikationen_3/2007/2007_hoffmann_vdi.pdf ist eine Anordnung zur Prüfung eines Antikollisionssystems eines Kraftfahrzeugs bekannt. Es ist ein Zugfahrzeug bereitgestellt, mit welchem ein Anhänger über ein Seil gekoppelt ist. Das Seil kann mittels einer am Zugfahrzeug angeordneten Auf- und Abwickeleinrichtung auf eine Trommel auf- und von dieser abgewickelt werden. Der Anhänger wird mittels des Seils hinter dem Zugfahrzeug gezogen. Beim Prüfen eines Antikollisionssystems eines Kraftfahrzeugs ist der Anhänger zunächst hinter dem Zugfahrzeug kurz gekoppelt. Das zu untersuchende Fahrzeug fährt hinter dem Zugfahrzeug und dem Anhänger. Plötzlich wird die Bremse der Seilwinde geöffnet, während die Scheibenbremse des Anhängers geschlossen wird. Dann bleibt der Anhänger stehen, während das Zugfahrzeug mit konstanter Geschwindigkeit weiterfährt. Eine Kollision des zu untersuchenden Fahrzeugs mit dem Anhänger steht bevor, und das Antikollisionssystem kann geprüft werden. Kurz vor der Kollision wird die Bremse der Seilwinde wieder geschlossen, und die Scheibenbremse des Anhängers wird geöffnet.

Ein System zur Prüfung von Antikollisionssystemen eines Kraftfahrzeugs ist außerdem aus dem Dokument Peter Schwerdtmann: "Das Auto von heute hält die Augen offen", 15. Juni 2006, Seiten 1 bis 2 (http://www.autoreporter.net/artikel.las?katsearch=7&subkatsearch=&subsubkatsearch=& artikel=15872&textphoto=photo>) bekannt. Es ist Aufgabe der vorliegenden Erfindung, ein System sowie ein Verfahren zur Funktionsprüfung eines Fahrerassistenzsystems zu schaffen, welches mit hoher Flexibilität aufgebaut beziehungsweise durchgeführt werden kann und mit welchem die realitätsnahe Überprüfung gewährleistet werden kann.

Diese Aufgabe wird durch ein System, welches die Merkmale nach Anspruch 1 aufweist, und ein Verfahren, welches die Merkmale nach Anspruch 11 aufweist, gelöst.

Ein erfindungsgemäßes System zur Funktionsprüfung eines Fahrerassistenzsystems umfasst ein Fahrzeug, welches auf einer zumindest mit einem Verkehrsweg ausgebildeten Prüfstrecke frei bewegbar ist. Dem Fahrzeug ist zumindest ein zu prüfendes Fahrerassistenzsystem zugeordnet. Dieses Fahrerassistenzsystem ist zur Detektion von Informationen über die Fahrzeugumgebung und/oder zur Verarbeitung von einem anderen System empfangenen Informationen über die Fahrzeugumgebung ausgebildet. Des Weiteren ist das Fahrerassistenzsystem so konzipiert, dass es abhängig von den Informationen über die Fahrzeugumgebung zur Warnung eines Fahrzeuginsassen und/oder zum automatischen Eingriff in das Fahrverhalten des Fahrzeugs ausgebildet ist. Ebenso kann zusätzlich oder anstatt dazu auch vorgesehen sein, dass das Fahrerassistenzsystem zur Aktivierung von Sicherheitseinrichtungen, wie beispielsweise eines Airbags, ausgebildet ist. Das Fahrerassistenzsystem ist somit zur Informationserzeugung zum Warnen und/oder zum selbstständigen Betätigen (automatischer Eingriff in das Fahrverhalten und/oder Aktiveren einer Sicherheitseinrichtung) einer Komponente des Fahrzeugs ausgebildet. Als Komponenten seine beispielsweise die Lenkung, die Bremse, der Airbag etc. genannt. Des Weiteren umfasst das System ein Dummyelement, welches zur Simulation einer realen Verkehrssituation auf der Prüfstrecke bewegbar ist, wobei sich zur Funktionsprüfung des Fahrerassistenzsystems das Dummyelement zumindest zeitweise in dem von dem Fahrerassistenzsystem erfassbaren Umgebungsbereich befindet. Durch dieses System kann in besonders realistischer Weise die Funktionalität eines Fahrerassistenzsystems getestet werden. Darüber hinaus kann dadurch hohe Flexibilität gewährleistet werden, da sowohl das Dummyelement als auch das Fahrzeug bewegt werden können und insbesondere das Dummyelement beliebig am simulierten Verkehr teilnehmen kann. Eine Bewegung des Dummyelements ist mit einer Bewegung des Fahrzeugs mittels eines Steuersystems synchronisiert basierend auf einer Bewegungsgeschwindigkeit des Dummyelements und/oder des Fahrzeugs und/oder einer Bewegungsrichtung des Dummyelements und/oder des Fahrzeugs, so dass das Dummyelement bei einer Simulation einer kritischen Verkehrssituation vor einem bevorstehenden Zusammenstoß mit dem Fahrzeug zur Vermeidung eines Zusammenstoßes aus dem Gefahrenbereich automatisch heraus bewegbar ist. Das Herausbewegen des Dummyelements aus dem Gefahrenbereich ist abhängig von einem Erreichen eines vordefinierbaren minimalen Abstands zwischen dem Dummyelement und dem Fahrzeug durchführbar, wobei der Abstand mit einer Sensoreinrichtung automatisch erfasst wird.

Das Dummyelement ist an einer Schienenvorrichtung angeordnet. Dadurch kann einerseits eine mechanisch stabile Anbringung gewährleistet werden und darüber hinaus eine geführte Bewegung des Dummyelements in reversibler, reproduzierbarer Weise ermöglicht werden.

Bevorzugt ist die Schienenvorrichtung brückenartig ausgebildet. Dadurch kann die im Hinblick auf eine optimale Funktionsprüfung und eine optimale Simulation einer realen Verkehrssituation vorgesehene positionsoptimierte Anbringung gewährleistet werden. Darüber hinaus kann durch die Ausgestaltung eine stabile Aufstellung gewährleistet werden. Nicht zuletzt kann vorgesehen sein, dass durch eine derartige brückenartige Ausgestaltung der Schienenvorrichtung diese sich über die gesamte Breite eines Verkehrswegs der Prüfstrecke oder sogar darüber hinaus erstrecken kann.

Insbesondere ist das Dummyelement separat zum Fahrzeug bewegbar. Die Bewegung des Dummyelements kann unabhängig von der Bewegung des Fahrzeugs sein.

Durch das System kann insbesondere eine Funktionsprüfung von Fahrerassistenzsystemen erfolgen, welche im Hinblick auf die vorausschauende Erkennung einer Verkehrssituation ausgerichtet sind und im Hinblick auf mögliche auftretende kritische Verkehrssituationen, welche zu Unfällen führen können oder aber auch zu Unfällen führen, entsprechende unfallverhindernde Maßnahmen oder die Unfallfolgen mildernde Aktionen einleiten können. Insbesondere können dadurch Komponenten eines Fahrzeugs entsprechend betätigt oder aktiviert werden, um diese Unfallvermeidung oder Reduzierung der Unfallfolgen gewährleisten zu können.

Insbesondere kann mit dem System auch die Möglichkeit geschaffen werden, reproduzierbare Versuche mit aussagekräftigen Messdaten generieren zu können. Dies ist insbesondere zur Erfüllung von Gesetzesauflagen besonders vorteilhaft, da somit bei Zulassungsfragen von Fahrerassistenzsystemen eine nähere reproduzierbare Funktionsprüfung ermöglicht werden kann.

Die Schienenvorrrichtung ist besonders bevorzugt zur mobilen Verwendung ausgebildet. Somit kann in einfacher und aufwandsarmer Weise eine Anbringung der Schienenvorrichtung und somit auch des Dummyelements an unterschiedlichsten Positionen der Prüfstrecke durchgeführt werden. In vielfältigster und individueller Ausgestaltung können somit Positionierungen und Bewegungsarten sowie Bewegungsrichtungen konstruiert werden, welche unterschiedlichsten Verkehrssituationen nachempfunden werden können. Die Flexibilität des Systems kann dadurch nochmals wesentlich verbessert werden. Durch die mobile Verwendung der Schienenvorrichtung kann auch eine wesentliche Kostenreduzierung des Systems geschaffen werden, da nicht eine Vielzahl von derartigen Schienenvorrichtungen benötigt wird, um an unterschiedlichsten Orten verschiedenste Verkehrssituationen simulieren zu können.

Selbstverständlich kann jedoch auch vorgesehen sein, dass eine derartige Schienenvorrichtung als stationäre Anordnung ausgebildet ist.

Vorzugsweise ist die Schienenvorrichtung so konzipiert, dass sie eine oder mehrere Schienen aufweist, an denen das Dummyelement bewegt werden kann. Insbesondere sind die Schienen der Schienenvorrichtung oberhalb des Dummyelements geführt. Durch diese Ausgestaltung können die Schienen positionsoptimiert angeordnet werden und wirken nicht störend bei der Simulation von Verkehrssituationen. Im möglicherweise zu simulierenden Gefahrenbereich zwischen dem Dummyelement und dem Fahrzeug ist somit insbesondere keine der Schienen angeordnet.

Es kann auch vorgesehen sein, dass die Schienen längenveränderlich ausgebildet sind, wodurch die Spannweite, über welche sich die Schienenvorrichtung erstrecken kann, variiert werden kann. Dadurch kann in individueller und flexibler Weise eine positionsoptimale Anbringung und auch Einstellung der Schienenvorrichtung durchgeführt werden, und diese an beliebigen unterschiedlichen Stellen der Prüfstrecke zur Simulation einer realen Verkehrssituation aufgestellt werden. Die Anpassung an die jeweilige Gegebenheit auf der Prüfstrecke kann dadurch besonders exakt und effizient erfolgen.

Vorzugsweise ist der Winkel, in welchem die Schienenvorrichtung zur Orientierung eines Verkehrswegs der Prüfstrecke angeordnet ist, variierbar. Auch dadurch kann in vielfältiger Weise das Simulieren unterschiedlicher Gegebenheiten auf der Prüfstrecke ermöglicht werden.

Es kann vorgesehen sein, dass die Schienenvorrichtung automatisch bewegt werden kann und dazu beispielsweise einen Antriebsmotor und Räder oder dergleichen aufweist. Dadurch kann relativ schnell und unproblematisch ein Ortswechsel der Schienenvorrichtung vollzogen werden. Zusätzliche Hilfsmittel, wie beispielsweise Kräne oder sonstige Transportmittel zum Versetzen der Schienenvorrichtung sind dadurch nicht erforderlich.

Vorzugsweise kann vorgesehen sein, dass das Dummyelement geradlinig bewegbar ist. Insbesondere ist es jedoch auch möglich, dass das Dummyelement zumindest zeitweise zur Ausführung einer nicht-geradlinigen Bewegung ausgebildet ist. Vielfältigste Bewegungsabläufe und noch realitätsnähere Simulationen von Verkehrssituationen sind dadurch ermöglicht.

Bevorzugt ist vorgesehen, dass die Zeitdauer- und/oder die BewegungsGeschwindigkeit und/oder die Bewegungsart des Dummyelements elektronisch gesteuert ist. Dazu kann die Schienenvorrichtung eine spezifische Steuereinheit aufweisen. Es kann jedoch auch vorgesehen sein, dass das Gesamtsystem eine zentrale Steuereinheit aufweist, über welche verschiedenste Bewegungsabläufe des Dummyelements und weiterer Systemkomponenten gesteuert und gegebenenfalls auch aneinander angepasst werden können.

Vorzugsweise ist vorgesehen, dass das Dummyelement bei einer Simulation einer kritischen Verkehrssituation vor einem bevorstehenden Zusammenstoß mit dem Fahrzeug zur Vermeidung dieses Zusammenstoßes aus dem Gefahrenbereich automatisch heraus bewegbar ist. Durch diese Ausgestaltung kann insbesondere bei der Prüfung von vorausschauend agierenden Fahrerassistenzsystemen eine ausreichende Funktionsprüfung durchgeführt werden, dennoch die Beschädigung oder Zerstörung des Dummyelements durch einen Zusammenstoß mit dem Fahrzeug vermieden werden. Dadurch kann ein unbeeinträchtigter oftmaliger Einsatz des Dummyelements bei verschiedensten Funktionsprüfungen ermöglicht werden, ohne dass ein permanenter Austausch oder Ersatz eines derartigen Dummyelements erfolgen muss. Es kann dadurch auch das Durchführen von Funktionsprüfungen effizienter und zeitoptimierter erfolgen, da aufwändige Montage- und Demontagearbeiten des Dummyelements vermieden werden. Nicht zuletzt kann dadurch auch ein erheblicher Anteil Kosten gespart werden, da die Anzahl an benötigen Dummyelementen deutlich reduziert werden kann.

Besonders bevorzugt ist es, wenn das Dummyelement bei der Simulation einer Verkehrssituation in einer vorgespannten Lage an der Schienenvorrichtung angeordnet ist. Gerade dadurch kann einerseits die gewünschte Bewegbarkeit oder Positionierung des Dummyelements auf der Prüfstrecke gewährleistet werden und andererseits jedoch die schnelle und unverzügliche Herausbewegbarkeit des Dummyelements aus dem Gefahrenbereich ermöglicht werden.

Vorzugsweise ist die vorgespannte Lage durch zumindest ein gespanntes und in der gespannten Lage gehaltenes, elastisches Seil erzeugt. Dies ermöglicht eine relativ einfache und dennoch zuverlässige Vorspannung der Position des Dummyelements im Vergleich zur Schienenvorrichtung. Darüber hinaus ist dies relativ verschleißarm und auch kostengünstig realisierbar. Darüber hinaus ermöglicht eine derartige Ausgestaltung mit einem elastischen Seil auch eine relativ kompakte und bauraumminimierte Anordnung. Nicht zuletzt kann dadurch auch die Schienenvorrichtung gewichtsminimiert bereit gestellt werden, was insbesondere im Hinblick auf deren Bewegbarkeit und mobiler Verwendbarkeit vorteilhaft ist.

Es kann auch vorgesehen sein, dass zur Erzeugung der Vorspannung und zum Lösen der Vorspannung eine andere Art der Energiespeicherung vorgesehen ist. Beispielsweise kann auch vorgesehen sein, dass eine pyrotechnische Auslösung oder eine pneumatische Auslösung, beispielsweise mittels eines Druckspeichers, oder eine hydraulische Auslösung eingesetzt ist. Ebenso ist eine elektromotorische Auslösung möglich. Fernern kann auch zumindest eine einfache Feder vorgesehen sein.

Vorzugsweise wird zum Herausbewegen des Dummyelements aus dem Gefahrenbereich der gespannte Zustand des Seils gelöst. Insbesondere erfolgt dies automatisch. Auch dieses Lösen ist bevorzugt durch eine Steuereinheit gesteuert. Besonders bevorzugt ist es, wenn das Dummyelement zum Herausbewegen aus dem Gefahrenbereich nach oben weggezogen wird. Es kann jedoch auch vorgesehen sein, dass das Dummyelement zum Herausbewegen aus dem Gefahrenbereich nach oben verschwenkt wird. Insbesondere kann hier beispielsweise eine seitliche Verschwenkung oder eine Verschwenkung in oder gegen die Fahrtrichtung vorgesehen sein. Ebenso kann jedoch auch ein Verschwenken nach unten und somit ein Wegklappen in Richtung nach unten zum Boden vorgesehen sein. Situationsabhängig kann dann jeweils die geeignetste Variante zum Herausbewegen aus dem Gefahrenbereich gewählt werden.

Das Herausbeweaen des Dummvelements aus dem Gefahrenbereich ist abhängig von einem Erreichen eines vordefinierbaren minimalen Abstands zwischen dem Dummyelement und dem Fahrzeug durchführbar. Durch die vorgespannte Lage des Dummyelements kann erreicht werden, dass ein relativ schnelles Herausbewegen aus dem Gefahrenbereich ermöglicht ist. Dies gewährleistet auch, dass sich das Dummyelement und das Fahrzeug relativ nahe annähern können, bevor das Herausbewegen erfolgt. Durch dieses relativ nahe Heranbewegen können auch Verkehrssituationen simuliert werden, welche im Hinblick auf eine Unfallvermeidung und die im Hinblick darauf erforderliche Reaktionen des Fahrerassistenzsystems interessant sind. Somit können durch diese Ausgestaltung auch relativ kurz vor einem möglichen Zusammenstoß auftretende Verkehrssituationen und die erforderliche Reaktion des Fahrerassistenzsystems präzise geprüft werden. Dadurch ist es auch möglich, dass relativ kurzfristig erforderliche, einen Zusammenstoß vermeidende oder Unfallfolgen vermindernde Aktivierungen von weiteren Komponenten des Fahrzeugs durch Einleiten dieser Aktivierung über das Fahrerassistenzsystem oder selbständiges Durchführen dieser Aktionen durch das Fahrerassistenzsystem überprüft werden können.

Der Abstand zwischen dem Dummvelement und dem Fahrzeug wird im Hinblick auf den vordefinierbaren minimalen Abstand zum Herausbewegen aus dem Gefahrenbereich mit einer Sensoreinrichtung automatisch erfasst. Dadurch können die Abstimmung und die gewünschten herbei zu führenden Verkehrssituationen präzise eingestellt werden.

Dabei ist die Bewegung des Dummyelements mit der Bewegung des Fahrzeugs synchronisiert. Gerade durch diese Ausgestaltung lassen sich Situationen realisieren, mit denen vorab definiert werden kann, wo möglicherweise ein Zusammenstoß zwischen dem Dummyelement und dem Fahrzeug stattfinden soll. So kann diese Definition eines möglichen Zusammenstoßes sowohl im Hinblick auf den Ort auf der Prüfstrecke als auch im Hinblick auf den Ort am Fahrzeug selbst als auch am Dummyelement selbst ermöglicht werden.

Dies kann insbesondere abhängig von den Ausgangspositionen der Simulationsteilnehmer in Abhängigkeit von spezifischen physikalischen Parametern sein, wie beispielsweise der Bewegungsgeschwindigkeit des Dummyelements und/oder des Fahrzeugs, der Bewegungsrichtung des Dummyelements und/oder des Fahrzeugs, der Bewegungsart des Dummyelements und/oder des Fahrzeugs und dergleichen.
Besonders bevorzugt ist es, wenn das Dummyelement einen Verkehrsteilnehmer symbolisiert. Beispielsweise kann hier ein Fußgänger oder ein Zweiradfahrer vorgesehen sein. Beispielsweise kann das Dummyelement in diesem Zusammenhang auch eine Person mit einem Fahrrad, eine Person mit einem Motorrad oder dergleichen symbolisieren. Es kann jedoch auch vorgesehen sein, dass das Dummyelement einen Teil eines anderen Fahrzeugs, beispielsweise eine Fahrzeugfront oder ein Fahrzeugheck, symbolisiert. Ebenso kann vorgesehen sein, dass das Dummyelement ein Verkehrszeichen oder einen Baum oder eine Straßenlaterne oder dergleichen symbolisiert. Auch ein Tier kann durch das Dummyelement symbolisiert sein.

Vorzugsweise beträgt die Geschwindigkeit des Dummyelements während einer Bewegungsphase in einem Funktionsprüfungsablauf weniger oder gleich 20 km/h, insbesondere weniger oder gleich 15 km/h. Dieser Geschwindigkeitsbereich ist insbesondere eine sehr realistische Annahme für Verkehrssituationen mit Fußgängern oder Radfahrern oder langsam fahrenden Motorradfahrern. Des Weiteren ist dieser Geschwindigkeitsbereich besonders realitätsnah für aus- oder einparkende Fahrzeuge sowie beispielsweise auf eine Fahrbahn fallende Gegenstände, wie umfallende Bäume oder dergleichen.

Bevorzugt ist vorgesehen, dass die Geschwindigkeit des Dummyelements während einer Prüfphase und somit auch während eines Ablaufs einer Funktionsprüfung veränderbar ist. Dies kann auch für das Fahrzeug vorzugsweise vorgesehen sein. Durch diese Ausgestaltung kann die Flexibilität und die Darstellung verschiedenster Verkehrssituationen nochmals wesentlich flexibilisiert und ausgeweitet werden.

Vorzugsweise ist die Anordnung beziehungsweise Positionierung und auch die Bewegung des Dummyelements auf der Prüfstrecke derart vorgebbar, dass der minimale Abstand zwischen dem Dummyelement und dem Fahrzeug zum Zeitpunkt des Herausbewegens des Dummyelements aus dem von dem Fahrerassistenzsystem erfassbaren Umgebungsbereich des Fahrzeugs zwischen 1,3 m und 2 m insbesondere etwa 1,5 m, beträgt. Für eine derartige Auslegung können insbesondere Verkehrssituationen simuliert werden, welche sehr schnell und unvorhergesehen auftreten können und bei denen relativ wenig Zeit zur Reaktion der Fahrerassistenzsysteme auf eine Unfallvermeidung oder eine Reduzierung der Unfallfolgen verbleiben. Gerade diesbezüglich ist es jedoch besonders vorteilhaft, eine sehr exakte Funktionsprüfung mit sehr realitätsnahen Situationen bereit stellen zu können, wie dies durch das vorgeschlagene System somit ermöglicht wird.

Bei einem erfindungsgemäßen Verfahren zur Funktionsprüfung eines Fahrerassistenzsystems wird zumindest ein Fahrzeug, dem ein zu prüfendes Fahrerassistenzsystem zugeordnet wird, auf einer mit zumindest einem Verkehrsweg ausgebildeten Prüfstrecke frei bewegt.

Zusätzlich oder anstatt dazu wird zumindest ein Dummyelement auf der mit zumindest einem Verkehrsweg ausgebildeten Prüfstrecke zur Simulation einer realen Verkehrssituation.

Das Fahrerassistenzsystem, welches dem Fahrzeug zugeordnet wird, ist zur Detektion von Informationen über die Fahrzeugumgebung und/oder zur Verarbeitung von von einem anderen System empfangenen Informationen über die Fahrzeugumgebung ausgebildet. Des Weiteren ist das Fahrerassistenzsystem so konzipiert, dass es abhängig von diesen Umgebungsinformationen eine Warnung an einen Fahrzeuginsassen erzeugt und/oder automatisch in das Fahrverhalten des Fahrzeugs eingreift und/oder eine Sicherheitseinrichtung des Fahrzeugs aktiviert. Das Dummyelement befindet sich durch dessen eigene Bewegung und/oder durch die Bewegung des Fahrzeugs zumindest zeitweise zur Funktionsprüfung des Fahrerassistenzsystems in dem von dem Fahrerassistenzsystems erfassbaren Umgebungsbereich. Das Dummyelement wird an einer Schienenvorrichtung angeordnet. Eine Bewegung des Dummyelements wird mit einer Bewegung des Fahrzeugs mittels des Steuersystems synchronisiert basierend auf einer Bewegungsgeschwindigkeit des Dummyelements und/oder des Fahrzeugs und/oder einer Bewegungsrichtung des Dummyelements und/oder des Fahrzeugs, so dass das Dummyelement bei einer Simulation einer kritischen Verkehrssituation vor einem bevorstehenden Zusammenstoß mit dem Fahrzeug zur Vermeidung eines Zusammenstoßes aus dem Gefahrenbereich automatisch heraus bewegbar ist. Das Herausbewegen des Dummyelements aus dem Gefahrenbereich ist abhängig von einem Erreichen eines vordefinierbaren minimalen Abstands zwischen dem Dummyelement und dem Fahrzeug durchführbar, wobei der Abstand mit einer Sensoreinrichtung automatisch erfasst wird.

Vorzugsweise ist das Fahrzeug als reales Fahrzeug ausgebildet, in dem ein zu prüfendes Fahrerassistenzsystem angeordnet ist. Das Dummyelement kann eine Puppe oder dergleichen sein. Insgesamt stellt das Dummyelement somit ein künstlich hergestelltes Objekt dar, welches das damit zu symbolisierende reale Element charakterisiert.

Die Prüfstrecke kann insbesondere ein Testgelände mit realen Straßen und dergleichen sein.

Vorteilhafte Ausgestaltungen des erfindungsgemäßen Systems sind als vorteilhafte Ausgestaltung des erfindungsgemäßen Verfahrens anzusehen.

Des Weiteren ist von der Erfindung eine Vorrichtung, insbesondere eine mobile Vorrichtung, umfasst, welche ein Dummyelement aufweist, welches bewegbar an der Vorrichtung angeordnet ist. Die Vorrichtung umfasst insbesondere eine Schienenanordnung, an welcher das Dummyelement mittelbar oder unmittelbar angeordnet sein kann und welches entlang dieser Schienenanordnung bewegt werden kann. Vorzugsweise sind zwei Schienen vorgesehen, auf denen ein Schlittenwagen hinund herbewegt werden kann. An dem Schlittenwagen ist bevorzugt dieses Dummyelement angeordnet. Insbesondere ist die Vorrichtung brückenartig konzipiert, wobei insbesondere vorgesehen ist, dass sich die Schienenanordnung über dem Dummyelement befindet. Das Dummyelement wird somit quasi unterhalb der Schienenanordnung positioniert und hin- und herbewegt. Vorzugsweise mündet die Schienenordnung der Vorrichtung jeweils an einen Träger, welcher insbesondere vergleichbar einem Brückenpfeiler positioniert ist. Die Schienenanordnung kann längenveränderlich ausgebildet sein. Insbesondere umfasst die Vorrichtung auch eine Vorspanneinrichtung zum Einstellen einer vorgespannten Lage des Dummyelements. Insbesondere umfasst die Vorspanneinrichtung ein elastisches Seil, insbesondere aus Elastomer, welches in einer vorgespannten Lage fixierbar ist. Die Vorspanneinrichtung ist vorzugsweise so konzipiert, dass das Dummyelement in der vorgespannten Lage relativ nahe oder direkt mit einem Untergrund, insbesondere einem Verkehrsweg einer Prüfstrecke, in Kontakt ist. Beim Lösen der vorgespannten Lage und somit beim Lösen des vorgespannten Seils ist vorzugsweise vorgesehen, dass das Dummyelement automatisch nach oben gezogen wird. Die Vorspanneinrichtung umfasst vorzugsweise Umlenkelemente, insbesondere Umlenkrollen, über die sich das elastische Seil legt und in eine vorgespannte Lage gebracht werden kann. Die vorgespannte Lage kann insbesondere mit Rastmitteln oder dergleichen fixiert werden. Diese können elektronisch gesteuert gelöst werden. Es kann jedoch auch ein manuelle mechanische Lösung dieser vorgespannten Lage und somit der Rastelemente oder dergleichen vorgesehen sein.

Vorzugsweise sind zwei Schienen der Schienenanordnung so positioniert, dass beim Hochziehen des Dummyelements sowie beim Übergang von der vorgespannten Lage in die entspannte Lage das Dummyelement zwischen den beiden Schienen seine entspannte Endposition findet. Dadurch kann eine Platz sparende Anordnung gewährleistet werden und darüber hinaus kann vermieden werden, dass das Dummyelement beim Einstellen der vorgespannten Lage oder aber auch beim Zurückführen in die entspannte Endlage an weiteren Komponenten der Vorrichtung oder der Vorspanneinrichtung vorbeigeführt ist. Beschädigungen oder ein hoher Verschleiß können dadurch verhindert werden.

Die Vorrichtung ist vorzugsweise dem System zur Funktionsprüfung eines Fahrerassistenzsystems zugeordnet.

Ein zu prüfendes Fahrerassistenzsystem kann beispielsweise zumindest einen Infrarot-Sensor und/oder zumindest einen Ultraschall-Sensor und/oder zumindest einen Radar-Sensor und/oder zumindest einen im sichtbaren Spektralbereich oder im nahen Infrarotbereich detektierenden Sensor umfassen. Das Fahrerassistenzsystem kann beispielsweise ein ACC-System oder ein Night-View-System oder ein Parkassistenzsystem oder ein System zur Überwachung des Spurwechsel oder eines Überschreitens einer Fahrbahnbegrenzung sein. Diese beispielhafte Aufzählung ist nicht abschließend zu verstehen. Insbesondere kann jedes Fahrerassistenzsystem zugrunde gelegt werden, insbesondere die "vorausschauend" agierenden Assistenzsysteme.

Mit dem erfindungsgemäßen System können auch zumindest zwei Fahrerassistenzsysteme gleichzeitig während einer Prüfphase geprüft werden. Dies können dann zusammenwirkende Fahrerassistenzsysteme oder aber auch vollkommen unabhängig voneinander agierende Fahrerassistenzsysteme sein.

Ein Ausführungsbeispiel der Erfindung wird nachfolgend anhand von schematischen Zeichnungen erläutert. Es zeigen:
- Fig. 1: ein erstes Ausführungsbeispiel eines erfindungsgemäßen Systems mit einer spezifischen Darstellung einer Verkehrssituation;
- Fig. 2: ein weiteres Ausführungsbeispiel eines erfindungsgemäßen Systems, in dem eine zweite Verkehrssituation simulativ dargestellt ist; und
- Fig. 3: eine vereinfachte schematische Darstellung von zwei Funktionszuständen einer Vorrichtung, an der ein Dummyelement angeordnet ist.

In den Figuren werden gleiche oder funktionsgleiche Elemente mit den gleichen Bezugszeichen versehen.

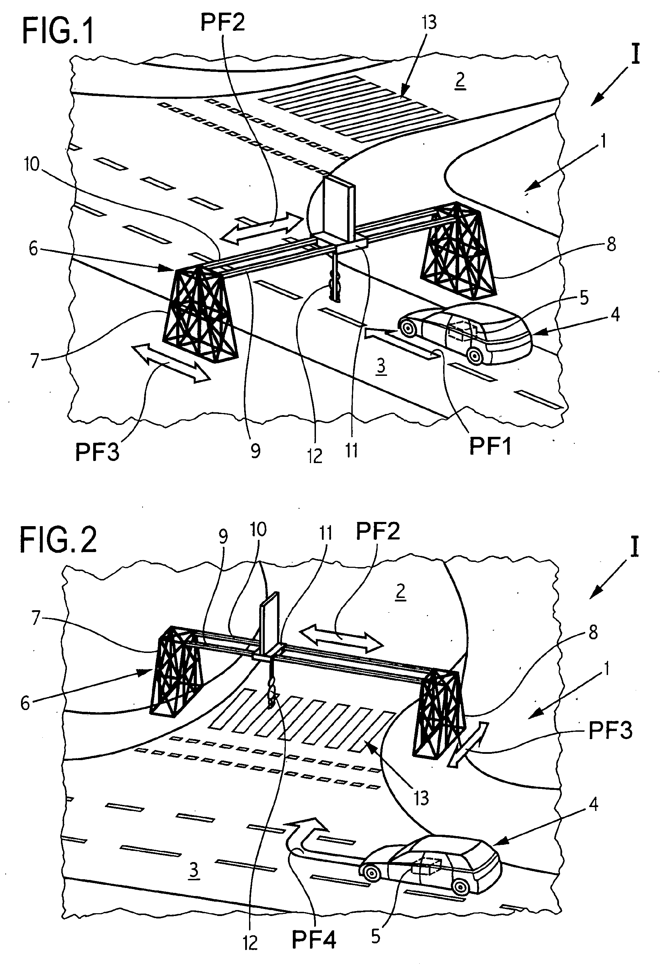

In Fig. 1 ist in einer perspektivischen Darstellung ein System I zur Funktionsprüfung eines Fahrerassistenzsystems 5 gezeigt. In der Darstellung gemäß Fig. 1 ist ein Teilausschnitt einer Prüfstrecke 1 dargestellt, welche zumindest die beiden Verkehrswege 2 und 3 aufweist. Die Verkehrswege 2 und 3 sind im Ausführungsbeispiel befestigte Straßen, wobei der erste Verkehrsweg 2 von dem zweiten Verkehrsweg 3 abzweigt. Die Prüfstrecke 1 ist in dem Ausführungsbeispiel ein abgesperrtes Gelände und somit nicht für den allgemeinen Straßenverkehr zugänglich.

Das System I umfasst zumindest ein Fahrzeug 4, welches als reales Fahrzeug ausgebildet ist und mit dem Fahrerassistenzsystem 5 versehen ist. Das Fahrzeug 4 kann sich frei auf der Prüfstrecke 1, insbesondere auf den Verkehrswegen 2 und 3 bewegen und wird insbesondere von einem realen Fahrer gesteuert. Das Fahrerassistenzsystem 5 ist im Ausführungsbeispiel mit einer entsprechenden Sensorik ausgebildet, welche zur Detektion der Fahrzeugumgebung ausgebildet ist. Abhängig von diesen Informationen über die Fahrzeugumgebung ist das Fahrerassistenzsystem 5 zur Warnung an den Fahrzeuginsassen und/oder zum automatischen Eingriff in das Fahrverhalten des Fahrzeugs 4 ausgebildet. Beispielsweise kann vorgesehen sein, dass das Fahrerassistenzsystem 5 bei einer vorausschauenden Erkennung einer kritischen Verkehrssituation, beispielsweise bei der Erfassung von Objekten auf dem Verkehrsweg 3 in unmittelbarer Nähe des Fahrzeugs 4 zur Erzeugung eines akustischen und/oder optischen Signals an den Fahrer konzipiert ist. Zusätzlich dazu kann vorgesehen sein, dass das Fahrerassistenzsystem 5 auch zum automatischen Eingriff ausgebildet ist und beispielsweise ein automatisches Betätigen der Bremsen und/oder einer Lenkbewegung etc. durchführt. Ebenso kann zusätzlich dazu oder anstatt dazu vorgesehen sein, dass das Fahrerassistenzsystem 5 zur Aktivierung einer Sicherheitseinrichtung, wie beispielsweise eines Airbags, ausgebildet ist.

Das System I umfasst des Weiteren eine Schienenvorrichtung 6, welche brückenartig ausgebildet ist und pfeilerartige Träger 7 und 8 umfasst. Die Träger 7 und 8 sind in der gezeigten Ausführung als Strebengerüste konzipiert, wodurch das Gewicht minimiert werden kann und dennoch die ausreichende mechanische Stabilität gewährleistet werden kann. Darüber hinaus umfasst die Schienenvorrichtung 6 zwei parallel und beabstandet zueinander angeordnete Schienen 9 und 10, welche sich zwischen den beiden Trägern 7 und 8 erstrecken.

Ein Schienenwagen 11 ist auf den Schienen 9 und 10 angeordnet und kann sich in Richtung des Pfeils PF2 hin- und herbewegen. An dem Schienenwagen 11 ist eine Tragekonstruktion angeordnet, an welcher ein Dummyelement 12 befestigt ist.

Das Dummyelement 12 symbolisiert im Ausführungsbeispiel einen Fußgänger. Wie in Fig. 1 gezeigt ist, ist die Ausgestaltung der Schienenvorrichtung 6 so konzipiert, dass die Schienen 9 und 10 über dem Dummyelement 2 verlaufen.

Die Schienenvorrichtung 6 ist zur mobilen Verwendung vorgesehen und kann beispielsweise in Richtung des Pfeils PF3 hin- und her verschoben werden. Ebenso kann vorgesehen sein, dass die Schienenvorrichtung 6 um zumindest einen der Träger 7 und/oder 8 verschwenkt werden kann.

Im gezeigten Ausführungsbeispiel erstreckt sich die Schienenvorrichtung 6 über die gesamte Breite des Verkehrswegs 3. Darüber hinaus ist in der in Fig. 1 gezeigten simulierten Verkehrssituation die Bewegungsrichtung des Dummyelements 12 gemäß dem Pfeil PF2 im Wesentlichen senkrecht zur Bewegungsrichtung des Pfeils PF1, welcher die Bewegungsrichtung des Fahrzeugs 4 symbolisiert.

Mit dem System I ist die Funktionsprüfung des Fahrerassistenzsystems 5 vorgesehen, wobei insbesondere eine Funktionsprüfung dahingehend erfolgen kann, ob das Fahrerassistenzsystem 5 den bewegbaren Fußgänger in Form des Dummyelements 12 ordnungsgemäß erfasst und eine ordnungsgemäße Reaktion im Hinblick auf eine Warnung an den Fahrzeuginsassen und/oder einen angepassten Eingriff in das Fahrverhalten des Fahrzeugs 4 durchführt beziehungsweise einleitet.

Das System I umfasst vorzugsweise des Weiteren eine nicht dargestellte Steuerung in Form eines Steuersystems, welches eine oder mehrere Steuereinheiten umfassen kann. Durch dieses Steuersystem können die einzelnen Komponenten des Systems individuell gesteuert und im Hinblick auf ihr Bewegungsverhalten bei einer Simulation einer Verkehrssituation definiert werden. Sowohl die Bewegungsart als auch die Bewegungsgeschwindigkeit des Dummyelements kann dabei vorgegeben werden. Insbesondere ist vorgesehen, dass die Bewegung des Dummyelements 12 mit der Bewegung des Fahrzeugs 4 synchronisiert ist. Dazu können ganz spezifische Bewegungsarten und/oder Bewegungsgeschwindigkeiten während einer Prüfphase eingestellt oder gegebenenfalls auch verändert werden. Dadurch können spezifisch gewünschte Orte eines möglichen (fiktiven) Zusammenstoßes zwischen dem Dummyelement 12 und dem Fahrzeug 4 vorgegeben werden.

Es kann vorgesehen sein, dass die Schienen 9 und 10 längenveränderlich ausgebildet sind. Ebenso kann auch vorgesehen sein, dass die in dem in Fig. 1 gezeigten Ausführungsbeispiel geradlinige Ausbildung der Schienen 9 und 10 zumindest bereichsweise so verändert ist, dass sie einen gekrümmten oder abgeknickten Verlauf aufweisen. Dadurch können geradlinige Bewegungen des Dummyelements 12 simuliert werden.

Selbstverständlich kann auch vorgesehen sein, dass eine nicht-geradlinige Bewegung des Dummyelements 12 mit der Fig. 1 gezeigten Schienenvorrichtung 6 realisiert werden kann. Insbesondere kann dies beispielsweise dadurch erreicht werden, dass das Dummyelement 12 an der Trägerkonstruktion mit dem Schienenwagen 11 nicht stationär ausgebildet ist, sondern, dass das Dummyelement 12 relativ zu der Haltekonstruktion mit dem Schienenwagen 11 bewegbar ist.

Ganz allgemein kann vorgesehen sein, dass das System I auch eine Mehrzahl von Fahrzeugen 4 und/oder eine Mehrzahl vom Dummyelementen 12 aufweist. Dazu kann vorgesehen sein, dass die Schienenvorrichtung 6 mit einer Mehrzahl von Dummyelementen 12 ausgestattet ist. Ebenso kann jedoch auch vorgesehen sein, dass das System I eine weitere, separat zur in Fig. 1 gezeigten Schienenvorrichtung 6 zusätzliche Schienenvorrichtung umfasst. Es kann jedoch auch vorgesehen sein, dass ein weiteres Dummyelement 12 durch eine anders geartete Vorrichtung auf der Prüfstrecke 1 mobil angeordnet ist.

Vorzugsweise beträgt die Bewegungsgeschwindigkeit des Dummyelements 12 weniger als 15 km/h. Die Fahrzeuggeschwindigkeit kann variieren, wobei bevorzugt Geschwindigkeiten bis 80 km/h vorgesehen sind.

In Fig. 2 ist eine weitere perspektivische Darstellung des Systems I gezeigt, wobei im Unterschied zur Ausgestaltung in Fig. 1 eine davon unterschiedliche Verkehrssituation simuliert ist. Die Schienenvorrichtung 6 ist bei dieser Ausgestaltung im Bereich des ersten Verkehrsweges 2 positioniert und erstreckt sich über die gesamte Breite des Verkehrsweges 2 in der Nähe eines Fußgängerüberwegs 13.

Beim in Fig. 1 gezeigten Szenario soll eine Funktionsprüfung des Fahrerassistenzsystems 5 im Hinblick auf ein unmittelbar in Fahrrichtung des Fahrzeugs angeordnetes und bewegbares Dummyelement 12 durchgeführt werden. In der in Fig. 2 gezeigten Verkehrssituation soll eine Funktionsprüfung des Fahrerassistenzsystems 5 im Hinblick auf eine relativ spät zu erkennende und gegebenenfalls kritische Verkehrssituation im Hinblick auf den Zusammenstoß mit dem Dummyelement 12 erkannt werden, wobei dazu der Abbiegevorgang des Fahrzeugs 4 dient, und die Bewegungsrichtung des Fahrzeugs 4 durch den Pfeil PF4 dargestellt ist. Insbesondere können dadurch auch Situationen realisiert werden, bei denen das Fahrzeug 4 mit einer Referenzgeschwindigkeit losfährt und in einem relativ kurzen Abstand zum Dummyelement 12 dieses erfasst beziehungsweise dieses in den Detektionsbereich eintritt. Beispielsweise können hier Situationen simuliert werden, bei denen das Dummyelement 12 erst in einem Abstand von etwa 1,5 m zum Fahrzeug 4 durch das System aus der Gefahrenzone herausbewegt wird. Dadurch kann getestet werden, ob in derartigen Situationen relativ schnell erforderliche Warnungen und/oder Eingriffe in das Fahrverhalten zur Vermeidung eines Zusammenstoßes und/oder zur Reduzierung von Unfallfolgen bei einem Zusammenstoß rechtzeitig und angepasst eingeleitet werden.

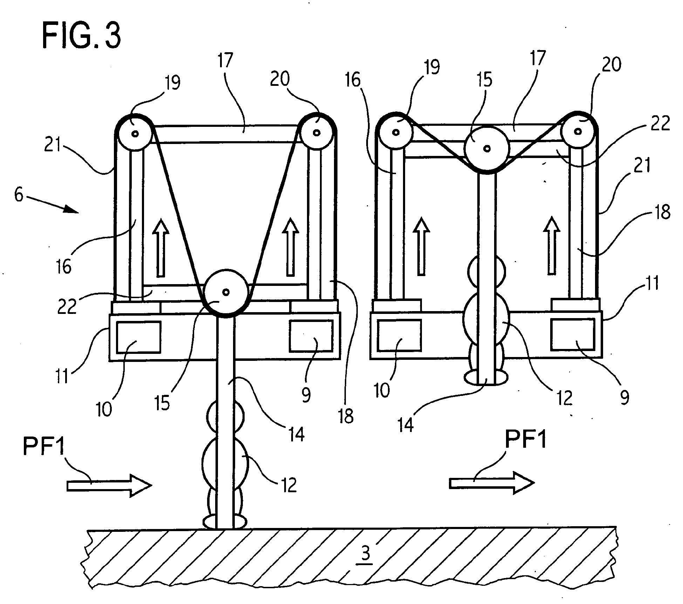

In besonders bevorzugter Weise ist vorgesehen, dass das System I so ausgebildet ist, dass das Dummyelement 12 bei einer Simulation einer kritischen Verkehrssituation vor einem bevorstehenden Zusammenstoß mit dem Fahrzeug 4 zur Vermeidung eines derartigen Zusammenstoßes aus dem Gefahrenbereich automatisch heraus bewegbar ist. Gemäß der Darstellung in Fig. 3 ist eine beispielhafte Ausführung zum Durchführen eines derartigen Herausbewegens aus dem Gefahrenbereich schematisch dargestellt.

Im Ausführungsbeispiel umfasst die Schienenvorrichtung 6 dazu eine Vorspanneinrichtung, welche auf dem Schlittenwagen 11 angeordnet ist. Wie zu erkennen ist, ist das Dummyelement 12 an einer Stange oder einem Träger 14 befestigt. In der in Fig. 3 gezeigten linken Darstellung ist das Dummyelement 12 in einer vorgespannten Lage gezeigt. Dies bedeutet, dass das der Vorspanneinrichtung zugeordnete elastische Seil 21 gespannt ist und in dieser gespannten Lage gehalten ist. Wie in Fig. 3 in der linken Darstellung zu erkennen ist, umfasst die Vorspanneinrichtung mehrere Umlenkelemente in Form von Rollen 19 und 20, welche an Trägern 16 und 18 befestigt und so mit dem Schlittenwagen 11 verbunden sind. Darüber hinaus ist zwischen den Rollen 19 und 20 eine Verstrebung 17 für die mechanische Stabilisierung ausgebildet. Das Seil 21 ist mit beiden separaten Enden an dem Schlittenwagen 11 befestigt und wird über die Rollen 19 und 20 umgelenkt, wobei es dann mit einer weiteren Umlenkung 15, welche mit dem Träge 14 verbunden ist, umgelenkt ist.

Die Umlenkung 15 und/oder der Träger 14 sind mit einer Fixiervorrichtung verbunden, welche symbolisch durch das Element 22 gezeigt ist. Dieses kann Rastelemente oder dergleichen umfassen, welche in entsprechende kompatible Rastbereiche eingreifen können, um somit die vorgespannte Lage fixieren zu können.

In der rechten Schnittdarstellung in Fig. 3 ist die entspannte Lage der Vorspanneinrichtung gezeigt, wobei dabei zu erkennen ist, dass das Dummyelement 12 im Vergleich zur Darstellung auf der linken Seite nach oben gezogen ist. Darüber hinaus befindet es sich zwischen den Schienen 9 und 10.

Das Lösen der vorgespannten Lage gemäß der linken Darstellung in Fig. 3 kann elektronisch gesteuert oder aber auch manuell betätigt erfolgen.

Insbesondere kann durch eine derartige Konstruktion erreicht werden, dass das Dummyelement 12 kurz vor dem Zusammenstoß mit dem Fahrzeug 4 aus dem Gefahrenbereich sehr schnell heraus bewegt werden kann, wodurch der tatsächliche Zusammenstoß verhindert werden kann. Eine Beschädigung des Dummyelements 12 und/oder des Fahrzeugs 4 kann dadurch verhindert werden.

Vorzugsweise wird das Lösen der vorgespannten Lage des Dummyelements 12 gemäß der linken Darstellung in Fig. 3 abhängig von physikalischen Parametern während der Funktionsprüfung durchgeführt. Dazu kann vorgesehen sein, dass geeignete Sensoriken an dem Dummyelement 12 und/oder dem Fahrzeug 4 und/oder an zumindest einem weiteren Ort der Prüfstrecke 1 angeordnet sind. Abhängig von diesen Informationen der Sensoriken kann dann elektronisch gesteuert das Lösen der vorgespannten Lage des Dummyelements 12 erfolgen.

Zum Messen derartiger Parameter, von denen abhängig das Hochschnellen des Dummyelements 12 erfolgen soll, können beispielsweise Lichtschranken, durch die insbesondere der Weg des Fahrzeugs 4 überwacht werden kann, und/oder Telemetrie im Fahrzeug 4 und/oder GPS-Systeme und/oder Induktionsspulen in den Verkehrswegen 2 und 3 vorgesehen sein.

Des Weiteren ist das System I auch so ausgebildet, dass ein vollautomatisches Verfahren einzelner Komponenten in die nächste Prüfungsausgangsposition erfolgen kann.

## Patentansprüche

1. System zur Funktionsprüfung eines Fahrerassistenzsystems (5), mit einem auf einer mit zumindest einem Verkehrsweg (2, 3) ausgebildeten Prüfstrecke (1) frei bewegbaren Fahrzeug (4), welchem zumindest ein zu prüfendes Fahrerassistenzsystem (5) zugeordnet ist, das zur Detektion von Informationen über die Fahrzeugumgebung und/oder zur Verarbeitung von von einem anderen System empfangenen Informationen über die Fahrzeugumgebung ausgebildet ist, und welches abhängig von den Informationen zur Warnung eines Fahrzeuginsassen und/oder zur automatischen Betätigung einer Komponente des Fahrzeugs (4) ausgebildet ist, einem Steuersystem und zumindest einem Dummyelement (12), welches zur Simulation einer realen Verkehrssituation auf der Prüfstrecke (1) bewegbar ist, wobei sich zur Funktionsprüfung des Fahrerassistenzsystems (5) das Dummyelement (12) zumindest zeitweise in dem von dem Fahrerassistenzsystem (5) erfassbaren Umgebungsbereich befindet, wobei das Dummyelement (12) an einer Schienenvorrichtung (6) angeordnet ist, **dadurch gekennzeichnet, dass**
eine Bewegung des Dummyelements (12) mit einer Bewegung des Fahrzeugs (4) mittels des Steuersystems synchronisiert ist basierend auf einer Bewegungsgeschwindigkeit des Dummyelements (12) und/oder des Fahrzeugs (4) und/oder einer Bewegungsrichtung des Dummyelements (12) und/oder des Fahrzeugs (4), so dass das Dummyelement (12) bei einer Simulation einer kritischen Verkehrssituation vor einem bevorstehenden Zusammenstoß mit dem Fahrzeug (4) zur Vermeidung eines Zusammenstoßes aus dem Gefahrenbereich automatisch heraus bewegbar ist, und
das Herausbewegen des Dummyelements (12) aus dem Gefahrenbereich abhängig von einem Erreichen eines vordefinierbaren minimalen Abstands zwischen dem Dummyelement (12) und dem Fahrzeug (4) durchführbar ist, wobei der Abstand mit einer Sensoreinrichtung automatisch erfasst wird.

2. System nach Anspruch 1,
**dadurch gekennzeichnet, dass**
die Schienen (9, 10) der Schienenvorrichtung (6) über dem Dummyelement (12) geführt sind.

3. System nach einem der vorhergehenden Ansprüche,
**dadurch gekennzeichnet, dass**
das Dummyelement (12) geradlinig bewegbar ist.

4. System nach einem der vorhergehenden Ansprüche,
**dadurch gekennzeichnet, dass**
das Dummyelement (12) bei der Simulation einer Verkehrssituation in einer vorgespannten Lage an der Schienenvorrichtung (6) angeordnet ist.

5. System nach Anspruch 4,
**dadurch gekennzeichnet, dass**
die vorgespannte Lage durch zumindest ein gespanntes und in der gespannten Lage gehaltenen, elastischen Seil (21) erzeugt ist.

6. System nach Anspruch 5,
**dadurch gekennzeichnet, dass**
zum Herausbewegen aus dem Gefahrenbereich der gespannte Zustand des Seils (21) gelöst wird.

7. System nach einem der vorhergehenden Ansprüche,
**dadurch gekennzeichnet, dass**
das Dummyelement (12) einen Verkehrsteilnehmer, insbesondere einen Fussgänger oder Zweiradfahrer, symbolisiert.

8. System nach einem der vorhergehenden Ansprüche,
**dadurch gekennzeichnet, dass**
die Geschwindigkeit des Dummyelements (12) während einer Bewegungsphase kleiner oder gleich 20km/h, insbesondere kleiner oder gleich 15 km/h beträgt.

9. System nach einem der vorhergehenden Ansprüche,
**dadurch gekennzeichnet, dass**
die Geschwindigkeit des Dummyelements (12) während einer Prüfphase veränderbar ist.

10. System nach einem der vorhergehenden Ansprüche,
**dadurch gekennzeichnet, dass**
die Anordnung und Bewegung des Dummyelements (12) auf der Prüfstrecke (1) derart vorgebbar ist, dass der minimale Abstand zwischen dem Dummyelement (12) und dem Fahrzeug (4) zum Zeitpunkt des Herausbewegens des Dummyelements (12) aus dem von dem Fahrerassistenzsystem (5) erfassbaren Umgebungsbereich des Fahrzeugs (4) zwischen 1,3 m und 2 m, insbesondere etwa 1,5 m, beträgt.

11. Verfahren zur Funktionsprüfung eines Fahrerassistenzsystems (5), bei dem zumindest ein Fahrzeug (4), dem ein zu prüfendes Fahrerassistenzsystem (5) zugeordnet wird, auf einer mit zumindest einem Verkehrsweg (2, 3) ausgebildeten Prüfstrecke (1) frei bewegt wird und/oder zumindest ein Dummyelement (12) auf der mit zumindest einem Verkehrsweg (2, 3) ausgebildeten Prüfstrecke (1) zur Simulation einer realen Verkehrssituation bewegt wird, wobei das Fahrerassistenzsystem (5) zur Detektion von Informationen über die Fahrzeugumgebung und/oder zur Verarbeitung von von einem anderen System empfangenen Informationen über die Fahrzeugumgebung ausgebildet ist, und welches abhängig von diesen Informationen eine Warnung an einen Fahrzeuginsassen erzeugt und/oder automatisch eine Komponente des Fahrzeugs betätigt, wobei sich das Dummyelement (12) durch dessen eigene Bewegung und/oder der Bewegung des Fahrzeugs (4) zumindest zeitweise zur Funktionsprüfung des Fahrerassistenzsystems (5) in dem von dem Fahrerassistenzsystem (5) erfassbaren Umgebungsbereich befindet,
wobei das Dummyelement (12) an einer Schienenvorrichtung (6) angeordnet wird,
**dadurch gekennzeichnet, dass**
eine Bewegung des Dummyelements (12) mit einer Bewegung des Fahrzeugs (4) mittels eines Steuersystems synchronisiert wird basierend auf einer Bewegungsgeschwindigkeit des Dummyelements (12) und/oder des Fahrzeugs (4) und/oder einer Bewegungsrichtung des Dummyelements (12) und/oder des Fahrzeugs (4), so dass das Dummyelement (12) bei einer Simulation einer kritischen Verkehrssituation vor einem bevorstehenden Zusammenstoß mit dem Fahrzeug (4) zur Vermeidung eines Zusammenstoßes aus dem Gefahrenbereich automatisch heraus bewegbar ist, und
das Herausbewegen des Dummyelements (12) aus dem Gefahrenbereich abhängig von einem Erreichen eines vordefinierbaren minimalen Abstands zwischen dem Dummyelement (12) und dem Fahrzeug (4) durchführbar ist, wobei der Abstand mit einer Sensoreinrichtung automatisch erfasst wird.

## Claims

1. System for a functional testing of a driver assistance system (5), with
a vehicle (4) being freely movable on a test way (1) formed with at least one traffic way (2, 3), to which at least one driver assistance system (5) to be tested is assigned, which is formed for a detection of information about the vehicle environment and/or for a processing of information received from a further system, about the vehicle environment, and which is formed, dependent on the information, for a warning of a vehicle occupant and/or for an automatic actuation of a component of the vehicle (4),
a control system, and
at least one dummy element (12) which is moveable on the test way (1) for a simulation of a real traffic situation, wherein,
for the functional testing of the driver assistance system (5), the dummy element (5) is at least temporarily arranged in the environment region being determinable by the driver assistance system (5), wherein
the dummy element (12) is disposed on a rail device (6),
**characterized in that**
the motion of the dummy element (12) is synchronized with a motion of the vehicle (4) by the control system based on a motion velocity of the dummy element (12) and/or of the vehicle (4) and/or on a motion direction of the dummy element (12) and/or the vehicle (4), such that the dummy element (12) is automatically movable out of the danger area during a simulation of a critical traffic situation previous to a forthcoming collision with the vehicle (4) for an avoidance of a collision, and
the moving of the dummy element (12) out of the danger area is performable dependent on a reaching of a predefineable minimal distance between the dummy element (12) and the vehicle (4), wherein
the distance is automatically determined by a sensor arrangement.

2. System according to claim 1,
**characterized in that**
the rails (9, 10) of the rail device (6) are guided over the dummy element (12).

3. System according to one of the preceding claims,
**characterized in that**
the dummy element (12) is moveable in a linear way.

4. System according to one of the preceding claims,
**characterized in that**
the dummy element (12) is arranged in a pretensioned position on the rail device (6) during the simulation of a traffic situation.

5. System according to claim 4,
**characterized in that**
the pretensioned position is generated by at least one elastic rope (21) pretensioned and held in the pretensioned position.

6. System according to claim 5,
**characterized in that**
for moving out of the danger area, the pretensioned state of the rope (21) is released.

7. System according to one of the preceding claims,
**characterized in that**
the dummy element (12) symbolizes a traffic participant, particularly a pedestrian or a cyclist.

8. System according to one of the preceding claims,
**characterized in that**
the velocity of the dummy element (12) during a moving phase is less than or equal to 20 km/h, particularly less than or equal to 15 km/h.

9. System according to one of the preceding claims,
**characterized in that**
the velocity of the dummy element (12) during a testing phase is modifiable.

10. System according to one of the preceding claims,
**characterized in that**
the arrangement and the motion of the dummy element (12) on the test way (1) is provideable such that the minimal distance between the dummy element (12) and the vehicle (4) at the moment of the moving of the dummy element (12) out of the environment region of the vehicle (4), detectable from the driver assistance system (5), is between 1,3 m and 2 m, particularly approximately 1,5 m.

11. Method for a functional testing of a driver assistance system (5), at which
at least one vehicle (4), to which a driver assistance system (5) to be tested is assigned, is freely moved on a test way (1) formed with at least one traffic way (2, 3) and/or
at least one dummy element (12) is moved on the test way (1) formed with at least one traffic way (2, 3), for a simulation of a real traffic situation, wherein
the driver assistance system (5) is formed for a detection of information about the vehicle environment and/or for a processing of information received from a further system, about the vehicle environment, and which dependent on this information, generates a warning to a vehicle occupant and/or automatically actuates a component of the vehicle, wherein
the dummy element (12), by its own motion and/or the motion of the vehicle (4), is at least temporarily arranged, for the functional test of the driver assistance system (5), in the environment region determinable by the driver assistance system (5), wherein
the dummy element (5) is disposed on a rail device (6),
**characterized in that**
a motion of the dummy element (12) is synchronized with a motion of the vehicle (4) by a control system based on a motion velocity of the dummy element (12) and/or of the vehicle (4) and/or on a motion direction of the dummy element (12) and/or of the vehicle (4), such that the dummy element (12) is automatically moveable out of the danger area during a simulation of a critical traffic situation previous to a forthcoming collision with the vehicle (4) for an avoidance of a collision, and
the moving of the dummy element (12) out of the danger area is performable dependent on a reaching of a predefined minimal distance between the dummy element (12) and the vehicle (4), wherein
the distance is determined automatically by a sensor arrangement.

## Revendications

1. Système servant à vérifier le fonctionnement d'un système d'aide au conducteur (5), avec au moins un véhicule (4) pouvant être déplacé librement sur un trajet de vérification (1) réalisé sur au moins une voie de circulation (2, 3), auquel véhicule au moins un système d'aide au conducteur (5) à vérifier est associé, lequel est réalisé aux fins de la détection d'informations portant sur l'environnement du véhicule et/ou aux fins du traitement d'informations, reçues par un autre système, portant sur l'environnement du véhicule et qui est réalisé afin d'alerter un passager du véhicule et/ou afin d'actionner de manière automatique un composant du véhicule (4) en fonction des informations, comprenant un système de commande et au moins un élément factice (12), qui peut être déplacé sur le trajet de vérification (1) afin de simuler une situation de trafic réelle, où aux fins de la vérification du fonctionnement du système d'aide au conducteur (5), l'élément factice (12) se trouve au moins par intermittence dans la zone environnante pouvant être détectée par le système d'aide au conducteur (5), où l'élément factice (12) est disposé au niveau d'un dispositif à rails (6),
**caractérisé en ce**
**qu'**un déplacement de l'élément factice (12) est synchronisé avec un déplacement du véhicule (4) au moyen du système de commande sur la base d'une vitesse de déplacement de l'élément factice (12) et/ou du véhicule (4) et/ou sur la base d'une direction de déplacement de l'élément factice (12) et/ou du véhicule (4) de sorte que l'élément factice (12) peut être déplacé, lors d'une simulation d'une situation de trafic critique, automatiquement hors de la zone de danger avant une collision imminente avec le véhicule (4) afin d'éviter une collision, et
**que** le déplacement de l'élément factice (12) hors de la zone de danger peut être mis en oeuvre en fonction d'une distance minimale pouvant être définie au préalable atteinte entre l'élément factice (12) et le véhicule (4),
où la distance est détectée automatiquement avec un système à capteurs.

2. Système selon la revendication 1,
**caractérisé en ce**
**que** les rails (9, 10) du dispositif à rails (6) sont guidés au-dessus de l'élément factice (12).

3. Système selon l'une quelconque des revendications précédentes,
**caractérisé en ce**
**que** l'élément factice (12) peut être déplacé de manière rectiligne.

4. Système selon l'une quelconque des revendications précédentes,
**caractérisé en ce**
**que** l'élément factice (12) est disposé, lors de la simulation d'une situation de trafic, dans une position précontrainte, au niveau du dispositif à rails (6).

5. Système selon la revendication 4,
**caractérisé en ce**
**que** la position précontrainte est produite par au moins un câble (21) élastique tendu et maintenu dans la position tendue.

6. Système selon la revendication 5,
**caractérisé en ce**
**que** l'état tendu du câble (21) est desserré afin de réaliser un déplacement hors de la zone de danger.

7. Système selon l'une quelconque des revendications précédentes,
**caractérisé en ce**
**que** l'élément factice (12) symbolise un usager de la circulation, en particulier un piéton ou un cycliste.

8. Système selon l'une quelconque des revendications précédentes,
**caractérisé en ce**
**que** la vitesse de l'élément factice (12) est, au cours d'une phase de déplacement, inférieure ou égale à 20 km/h, en particulier inférieure ou égale à 15 km/h.

9. Système selon l'une quelconque des revendications précédentes,
**caractérisé en ce**
**que** la vitesse de l'élément factice (12) peut être modifiée au cours d'une phase de vérification.

10. Système selon l'une quelconque des revendications précédentes,
**caractérisé en ce**
**que** l'agencement et le déplacement de l'élément factice (12) sur le trajet de vérification (1) peuvent être spécifiés de telle manière que la distance minimale entre l'élément factice (12) et le véhicule (4) au moment du déplacement de l'élément factice (12) hors de la zone environnante, pouvant être détectée par le système d'aide au conducteur (5), du véhicule (4) est comprise entre 1,3 m et 2 m, en particulier est d'environ 1,5 m.

11. Procédé servant à vérifier le fonctionnement d'un système d'aide au conducteur (5), **caractérisé en ce qu'**au moins un véhicule (4), auquel un système d'aide au conducteur (5) à vérifier est associé, est déplacé librement sur un trajet de vérification (1) réalisé avec au moins une voie de circulation (2, 3) et/ou **en ce qu'**au moins un élément factice (12) est déplacé sur le trajet de vérification (1) réalisé avec au moins une voie de circulation (2, 3), servant à simuler une situation de trafic réelle, où le système d'aide au conducteur (5) est réalisé afin de détecter des informations portant sur l'environnement du véhicule et/ou afin de traiter des informations, reçues par un autre système, portant sur l'environnement du véhicule et qui produit, en fonction desdites informations, une alerte à l'attention d'un passager du véhicule et/ou actionne automatiquement un composant du véhicule, où l'élément factice (12) se trouve, du fait de son propre déplacement et/ou du déplacement du véhicule (4), au moins par intermittence dans la zone environnante pouvant être détectée par le système d'aide au conducteur (5) afin de vérifier au moins par intermittence le fonctionnement du système d'aide au conducteur (5), où l'élément factice (12) est disposé au niveau d'un dispositif à rails (6),
**caractérisé en ce**
**qu'**un déplacement de l'élément factice (12) est synchronisé avec un déplacement du véhicule (4) au moyen d'un système de commande sur la base d'une vitesse de déplacement de l'élément factice (12) et/ou du véhicule (4) et/ou sur la base d'une direction de déplacement de l'élément factice (12) et/ou du véhicule (4) de sorte que l'élément factice (12) peut être déplacé automatiquement hors de la zone de danger, lors d'une simulation d'une situation de trafic critique, avant une collision imminente avec le véhicule (4) afin d'éviter une collision, et
**que** le déplacement de l'élément factice (12) hors de la zone de danger peut être mis en oeuvre en fonction d'une distance minimale pouvant être définie au préalable atteinte entre l'élément factice (12) et le véhicule (4), où la distance est détectée automatiquement avec un système à capteurs.
